# EUROPEAN PATENT SPECIFICATION

(11) **EP 1 038 571 B1**
(45) Date of publication and mention of the grant of the patent: **27.10.2004**
(21) Application number: 00302149.0
(22) Date of filing: 16.03.2000
(51) Int. Cl.: B01D 71/62, B01D 69/02, B01D 69/08, B01D 67/00, B01D 63/02

(54) **Solvent-resistant microporous polybenzimidazole membranes**
Lösungsmittelbeständige mikroporöse Polybenzimidazolmembranen
Membranes microporeuses en polybenzimidazole résistantes aux solvents

(30) Priority: 19.03.1999 US 125345 P
(43) Date of publication of application: 27.09.2000
(73) Proprietor: BEND RESEARCH, INC., Bend Oregon, 97701 (US)
(72) Inventor: Barss, Robert P., Bend, Oregon 97701 (US); Friesen, Dwayne T., Bend, Oregon 97702 (US); McCray, Scott B., Bend, Oregon 97702 (US); Pearson, Kendall R., Bend, Oregon 97701 (US); Ray, Roderick J., Bend, Oregon 97702 (US); Sidwell, Delores R., Bend, Oregon 97702 (US); West, James B., Bend, Oregon 97701 (US)
(74) Representative: Croft, Michael John

(56) References cited:
- EP-A- 0 753 336
- US-A- 4 020 142
- US-A- 4 512 894
- US-A- 4 704 324
- US-A- 4 772 391
- US-A- 4 992 176
- US-A- 5 753 008

## Description

### BACKGROUND OF THE INVENTION

Microporous flat sheet and hollow fiber membranes are well known in the art. See, for example, U.S. Patent Nos. 4,230,463 and 4,772,391. Such membranes are typically made by a solution-casting process (flat sheets) or by a solution precipitation process (hollow fibers), wherein the polymer is precipitated from a polymer/solvent solution. Conventional polymers used for microporous membrane formation by solution precipitation are not resistant to the solvents used to form the polymer solution for the casting or spinning fabrication, or to solvents of similar strength since such solvents dissolve or swell the polymer. Thus, membranes made from conventional polymers cannot be used to treat feed streams containing solvents or other harsh chemicals.

The manufacture of solvent-resistant membranes from polyimides is well known in the art. See, for example, commonly assigned U.S. Patent No. 5,753,008. This patent discloses a process for spinning a fiber from a precursor polymer, and then rendering the fiber solvent-resistant in a post-casting step. Such membranes are indeed solvent-resistant. However, polyimides are known to be susceptible to hydrolysis when exposed to water at elevated temperatures. As a result, these solvent-resistant microporous polyimide fibers are not suitable for applications where the stream to be treated is hot and contains water.

One polymer that has been shown to be stable to hot water is polybenzimidazole (PBI). PBI has also been shown to be chemically resistant after crosslinking. See, for example, U.S. Patent Nos. 4,693,824, 4,020,142, 3,720,607, 3,737,042, 3,841,492, 3,441,640, 4,693,825, 4,512,894 and 4,448,687. In these patents, various processes for making membranes from PBI are disclosed. However, the resulting membranes are not microporous, but instead have a dense skin on at least one surface, resulting in low permeation rates. These patents also disclose a number of techniques for crosslinking the PBI membranes. However, these crosslinking procedures lead to a dramatic increase in the brittleness of the membrane, making them difficult to manufacture and use.

### BRIEF SUMMARY OF THE INVENTION

The invention comprises a method of making a polybenzimidazole microporous hollow fiber membrane comprising the steps:
(a) providing a polymer solution comprising 15 to 30 wt% polybenzimidazole, 2 to 5 wt% high molecular weight pore-former having a molecular weight of ≥1000 daltons, 5 to 30 wt% low molecular weight pore-former having a molecular weight of ≤100 daltons, and a solvent;
(b) forming a spun membrane by extruding said polymer solution of step (a) through an orifice at a temperature of 25° to 60°C while simultaneously injecting a coagulating fluid through a needle located in said orifice;
(c) providing a quench bath;
(d) passing the spun membrane of step (b) through said quench bath at a temperature of from 10° to 40°C to form a microporous hollow fiber membrane; and
(e) rinsing said membrane of step (d).

The membranes formed by the method of the present invention are useful for a variety of applications, including ultrafiltration, microfiltration and membrane contactors; and as supports for composite membranes that are used in such applications as reverse osmosis, nanofiltration, pervaporation, vapor permeation and gas separations.

### DETAILED DESCRIPTION OF THE PREFERRED EMBODIMENTS

In contrast to the procedures of the prior art, it has now been found that microporous PBI membranes with exceptional performance and solvent resistance, can be made by proper selection of the procedures for making and crosslinking the membranes.

As previously indicated, the invention comprises a method of making a microporous hollow fiber membrane formed from PBI, the membrane being fabricated by the following steps:
(a) providing a fiber-spinning polymer solution comprising 15 to 30 wt% PBI, 2 to 5 wt% high molecular weight pore-former with a molecular weight of >1000 daltons, 5 to 30 wt% low molecular weight pore-former, with a molecular weight of ≤100 daltons, and a solvent;
(b) forming a spun membrane by extruding the polymer solution through an orifice at a temperature of 25° to 60°C while simultaneously injecting a coagulating fluid through a needle located in the orifice;
(c) providing a quench bath;
(d) passing the spun membrane through the quench bath at a temperature of 10° to 40°C to form a microporous hollow fiber membrane; and
(e) rinsing the membrane.
Additional optional steps include drying and post-treating the membrane by crosslinking or annealing.

The microporous hollow fiber PBI membranes formed by this process have excellent properties for a wide variety of membrane separation processes. Generally, the membranes have a gas permeance of at least 5 m³/m²•hr•atm, preferably at least 10 m³/m²•hr•atm. In addition, the surface pores on the membrane (both inside and outside surfaces of the hollow fiber) are greater than about 0.05 µm, and less than about 1 µm. The fibers have a tensile strength of at least 100 g/filament, preferably at least 200 g/filament. The fibers also have an elongation at break of at least 10%, preferably at least 15%. The fibers can also be made with a wide range of diameters and wall thicknesses, depending on the application of use. Generally, the inside diameter of the fibers can range from about 200 µm to about 1000 µm, and the wall thickness of the fibers can range from about 30 µm to about 200 µm.

The invention can be used with virtually any PBI, and in particular with those described in U.S. Patent Nos. 2,895,948, 5,410,012, and 5,554,715. These PBIs have the following general repeat structure: 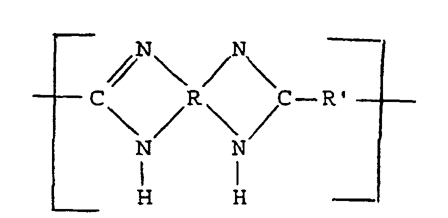 where R is a tetravalent aromatic nucleus, typically symmetrically substituted, with the nitrogen atoms forming the benzimidazole rings being paired upon adjacent carbon atoms of the aromatic nucleus, and R' is selected from (1) an aromatic ring, (2) an arylene group, (3) an alkylene group, (4) an arylene-ether group, and (5) a heterocyclic ring, such as a pyridine, pyrazine, furan, quinoline, thiophene, or pyran. A preferred PBI is poly(2,2'-[m-phenylene])-5,5'-bis-benzimidazole.

It has been found that to obtain a microporous fiber with high porosity and high gas permeance while maintaining excellent physical properties such as high tensile strength and elongation at break, a mixture of a high molecular weight pore-former and a low molecular weight pore-former should be used. The weight ratio of high molecular weight pore-former to low molecular weight pore-former should range from 0.05 to 0.5, preferably from 0.075 to 0.25.

The high molecular weight pore former should have a molecular weight of at least about 1000 daltons. It should also be soluble in the solvent used for the fiber-spinning polymer solution and in the materials used for the internal coagulation solution and the quench bath. Examples of suitable high molecular weight pore-formers include polyvinyl pyrrolidinone (PVP), polyvinyl alcohol (PVA), polyvinyl acetate (PVAc), polyethylene glycol (PEG), and polypropylene glycol (PPG). A preferred high molecular weight pore-former is PVP.

The low molecular weight pore-former should have a molecular weight of no greater than about 100 daltons, and should be hydrophilic. It should also be soluble in the solvent used for the fiber-spinning polymer solution and in the materials used for the internal coagulation solution and the quench bath. In general, the class of useful low molecular weight pore-formers comprises (i) a lower alkanol, (ii) a polyfunctional alcohol, (iii) ester and ether derivatives of an alkanol, (iv) ester and ether derivatives of a polyfunctional alcohol, (v) mixtures of (i)-(iv), and (vi) mixtures of water and at least one of (i)-(v).

Examples of suitable low molecular weight pore-formers include monofunctional alcohols, such as methanol (MeOH), ethanol (EtOH), isopropyl alcohol (IPA), n-propanol, and the various isomers of butanol; polyfunctional alcohols, such as ethylene glycol, propylene glycol, and glycerol; and ether and ester derivatives of monofunctional and polyfunctional alcohols. A preferred low molecular weight pore-former is n-propanol.

Preferred solvents for the fiber-spinning solution include dimethylacetamide (DMAc), dimethylformamide (DMF) and N-methyl pyrrolidone (NMP). The fiber-spinning polymer solution preferably is filtered to remove oversize particles and lumps through a fine gage (10-30 µm) filter, and has a viscosity of from 15,000 to 50,000 cp at the spinning temperature, which is preferably conducted at from 25° to 60°C. Fiber-spinning or extrusion is conducted at an extension rate of from 1 to 5 cm³/min, depending upon the spinning solution viscosity and the temperature at which the extrusion is conducted. A preferred extrusion rate is 2 cm³/min. Conventional tube-in-orifice spinnerets may be used, typically having an orifice diameter on the order of 500 to 1500 µm and a tube on the order of 25- to 30-gage.

Both the internal coagulation solution and the quench bath preferably comprise a polar solvent selected from MeOH, EtOH, n-propanol, IPA, DMAc, water and mixtures thereof. Rinsing is preferably conducted with water and/or IPA.

In a preferred aspect, the method of the invention comprises a method for crosslinking a PBI membrane by the following steps:
(a) providing a crosslinking solution comprising a multi-functional alkyl halide in a solvent;
(b) soaking the membrane in the crosslinking solution for 0.5 to 48 hours and at a temperature from 50 to 150°C; and
(c) drying the membrane for 0.5 to 48 hours at a temperature of 25° to 200°C.

The multi-functional alkyl halide should contain at least two halide substituents, and has the general structure

X- (CH₂)ₙ-CH₂-X

or 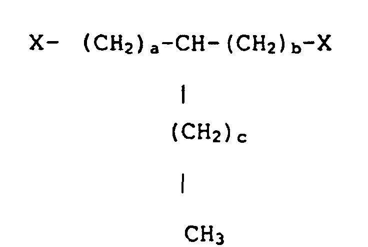 where X is Br or Cl, n is 1 to 11, a is 1 to 10, b is 0 to 4, and c is 0 to 6. A preferred class of difunctional alkyl halides comprises straight chain, terminally disubstituted compounds having the structure

X-(CH₂)ₙ-CH₂-X

where X and n are as defined above. A most preferred difunctional alkyl halide is dibromobutane (DBB).

The alkyl halide may also contain three or more halide substituents. Exemplary alkyl halides with three or more halide substituents include tribromopropane, trichloropropane, pentaerythrityl tetrabromide" and pentaerythrityl tetrachloride.

The solvent used to dissolve the alkyl halide should not react with the alkyl halide and should not dissolve the uncrosslinked PBI membrane. Preferred solvents include ketones, such as acetone, methyl isobutyl ketone (MIBK), methyl ethyl ketone (MEK), and pentanone; and ethers, such as isopropyl ether and butyl ether. The resulting crosslinked PBI membrane has exceptional chemical and thermal resistance.

The composite hollow fiber membrane formed by the method of the invention preferably comprises at least one permselective coating formed on a crosslinked microporous PBI hollow fiber membrane made as described above. The permselective coating that is applied depends upon the particular separation it is desired to achieve, such as the removal of water vapor from organics, the removal of volatile compounds from water vapor, the separation of organics or the purification of water.

Details of the construction and operation of a vapor separation module that can be used with the hollow fiber membrane formed by the method of the present invention are exemplified in Examples 28-31.

For the removal of water from a feed stream, it is best that the permselective coating material be more permeable to water than to other components in the feed stream. In this case, the material is preferably very hydrophilic. Examples of permselective coating materials useful for removing water from organics include polyvinyl alcohol (PVA), cellulosic materials, chitin and derivatives thereof, polyurethanes, polyamides, polyamines, poly(acrylic acids), poly(acrylates), poly(vinyl acetates), and polyethers. Other polymers normally viewed as not especially hydrophilic such as polyolefins, polystyrene, and poly-acrylates can be rendered sufficiently hydrophilic to be selective to water vapor by incorporating hydrophilic groups such as hydroxyl, amine, carboxyl, ether, sulfonate, quaternary amine, carboxyl, ether, sulfonate, phosphonate, quaternary amine, and ester functionalities. Such groups can be incorporated by choosing monomers that contain such groups or by adding them in a post-treatment step such as radiation- or plasma-grafting. Blends and copolymer versions of these materials are also useful. The coating material should also be crosslinked to provide sufficient resistance to swelling or dissolution by components of the feed stream.

A particularly preferred permselective coating material for dehydration of organics is a blend of PVA and polyethyleneimine (PEI), wherein the material is crosslinked through the amine groups of the PEI using ethyl succinate by heating to elevated temperatures. By varying the ratio of PVA to PEI or the amount of ethyl succinate crosslinking agent used, the selectivity and permeability of the membrane may be adjusted. This coating will be extremely effective for vapor permeation applications. However, it will also prove useful for other separations including dehydration of organics by pervaporation; the removal of water vapor from compressed gas streams, such as air and natural gas; and for use in fuel cells, allowing the transport of water while restricting the passage of hydrogen.

A particularly preferred class of permselective coating materials for water purification by reverse osmosis or nanofiltration is polyamides formed by interfacial polymerization. Examples of such coatings as found in U.S. Patent Nos. 5,582,725, 4,876,009, 4,853,122, 4,259,183, 4,529,646, 4,277,344 and 4,039,440, the pertinent disclosures of which are incorporated herein by reference.

For the removal of volatile compounds from water or gas streams such as air or nitrogen, the permselective coating is usually, but not always, an elastomeric or rubbery polymer. Examples of materials useful for such separations include natural rubber, nitrile rubber; polystyrene-butadiene copolymers; poly(butadiene acrylonitrile) rubber; polyurethanes; polyamides, polyacetylenes; poly(trimethylsilylpropyne); fluoroelastomers; poly(vinylchlorides); poly(phosphazenes), particularly those with organic substituents; halogenated polymers, such as poly(vinylidene fluoride) and poly(tetrafluoroethylene); and polysiloxanes, including silicone rubber. Blends and copolymer versions of these materials are also useful. Ion exchange membranes and composites may also be used for some applications. A particularly preferred coating for the removal of volatile compounds from water or gas streams is poly(dimethylsiloxane) and derivatives thereof.

For separation of organic mixtures, the choice of permselective coating material will depend on the organics being separated. Many of the polymers listed above for the dehydration of organics or the removal of volatile organics from water or gas streams will work well for separating certain organic mixtures. In particular, it is common to use copolymers for separating organics since the ratio of the so-called "hard" and "soft" segments can easily be adjusted to provide the desired selectivity.

The permselective coating material may be placed on the surface of the support fiber using a number of conventional techniques, including dip-coating, painting, spray-coating, solution-coating, or by interfacial polymerization. The coating may be placed on the inside (lumens) or outside surface of the support fiber; in most applications it is preferred that the coating be placed on the lumens.

### EXAMPLE 1

A fiber-spinning solution was prepared consisting of 18 wt% poly(2,2'-[m-phenylene])-5,5'bis-benzimidazole (Hoechst-Celanese, Charlotte, North Carolina), 3 wt% PVP (K16-18, Acros Organics, New Jersey) (a high molecular weight pore former with a molecular weight of 8000 daltons), 22 wt% n-propanol (a low molecular weight pore-former with a molecular weight of 60 daltons), 0.4 wt% water and the balance DMAC. This solution was filtered through a 20 µm polypropylene filter while transferring the same to a reservoir held at a pressure of 25 inches of vacuum. The viscosity of the solution at 50°C was 13,800 cp. The fiber-spinning solution was then extruded at a rate of 2 cm³/min at 50°C through a tube-in-orifice spinneret having an orifice diameter of 800 µm and a 27-gage tube using 100% IPA as the internal coagulation solution. The hollow fiber formed by this extrusion was drawn at a rate of 460 cm/min into a quench bath at 30°C comprising 75 wt% IPA and 25 wt% methanol. The resulting solidified fiber was rinsed in water at 40°C for about 2 hours, drained, and then rinsed overnight in IPA at room temperature.

The resulting microporous hollow fiber membrane had an average internal diameter of 420 µm and an average wall thickness of 80 µm. Microporosity of the fibers was indicated by their high nitrogen permeance of 25 m³/m²•hr•atm. The fibers had a tensile strength of 620 g/filament and an elongation at break of 22%.

To effect crosslinking, samples of the hollow fiber membranes were soaked for 16 hours in a solution comprising 5 wt% dibromobutane (DBB) in methyl isobutyl ketone (MIBK) at 100°C, air-dried for about 1 hour and then heat-treated at 150°C for 3 hours. The resulting fibers had the properties shown in Table 1.

### EXAMPLE 2

To test the solvent resistance of the fibers, crosslinked and uncrosslinked fiber samples from Example 1 were soaked for 72 hours in a solution of N-methyl pyrollidinone (NMP) at 100°C, which caused the uncrosslinked fibers to dissolve, and the crosslinked fibers to absorb NMP and swell, but remain intact. As shown in Table 1, the crosslinked fibers maintained high strength (i.e., greater than 100 g/fil) and high elongation at break values. After drying the crosslinked fibers to remove NMP, their permeance to nitrogen was tested and shown to be the same as for the crosslinked fibers of Example 1 before exposure to the solvent and high temperature.

**Table 1**

| Example No. | Tensile Strength (g/fil) | Elongation at Break (%) | Nitrogen Permeance* |
|---|---|---|---|
| 1(uncrosslinked) | 720 | 20 | 25 |
| 1 (crosslinked) | 920 | 21 | 45 |
| 2 (crosslinked) | 250 | 75 | 45 |
| 2 (uncrosslinked) | Dissolved | Dissolved | - |

| | | | |
|---|---|---|---|
| * m³/m²•hr•atm | | | |

### COMPARATIVE EXAMPLE

Hollow fiber membranes were cast as in Example 1 except that no high molecular weight pore-former was included, the fiber-spinning solution comprised 18 wt% PBI, 25 wt% n-propanol, 0.4 wt% water, and the balance DMAC. The fiber-spinning solution was maintained at 30°C and there was no crosslinking. The resulting hollow fibers exhibited virtually no permeance to nitrogen.

### Example 3

Hollow fiber membranes were prepared as in Example 1 with the following exceptions: the fiber-spinning solution was maintained at a temperature of 30°C, the viscosity of the fiber-spinning solution at 30°C was 37,000 cp, and there was no crosslinking.

The resulting microporous hollow-fiber had an average internal diameter of 440 µm and an average wall thickness of 100 µm. The microporosity of the fibers was indicated by their high nitrogen permeance of 25 m³/m²•hr•atm. The fibers had a tensile strength of 720 g/fil and an elongation at break of 20%.

### Examples 4-8

Hollow fiber membranes were prepared as in Example 1 with the internal coagulation solutions given in Table 2 and there was no crosslinking. The nitrogen permeance, tensile strength, and elongation at break of these fibers were as shown in Table 2.

**Table 2**

| Example | Internal Coagulation Solution | Nitrogen Permeance* | Tensile Strength (g/fil) | Elongation at break (%) |
|---|---|---|---|---|
| 4 | 85 wt% IPA/15 wt% MeOH | 18 | 414 | 15 |
| 5 | 55 wt% IPA/15 wt% MeOH | 8 | 399 | 18 |
| 6 | 80 wt% DMAC/20 wt% MeOH | 21 | 243 | 7 |
| 7 | 20 wt% DMAC/80 wt% MeOH | 8 | 213 | 5 |
| 8 | 28 wt% DMAC/5 wt% water/67 wt% MeOH | 4 | 259 | 15 |

| | | | | |
|---|---|---|---|---|
| * m³/m²•hr•atm | | | | |

### Examples 9-13

Hollow fiber membranes were prepared as in Example 1 except that the quench solution comprised 100% IPA, and the fiber-spinning polymer solution temperatures and internal coagulation solutions were as noted in Table 3, and there was no crosslinking. The nitrogen permeance, tensile strength, and elongation at break of these fibers were as shown in Table 3.

**Table 3**

| Example | Polymer Solution Temperature | Internal Coagulation Solution | Nitrogen Permeance* | Tensile Strength (g/fil) | Elongation at Break (%) |
|---|---|---|---|---|---|
| 9 | 30°C | 20 wt% DMAC in IPA | 9 | 350 | 14 |
| 10 | 40°C | 20 wt% DMAC in IPA | 5 | 340 | 11 |
| 11 | 50°C | 20 wt% DMAC in IPA | 9 | 300 | 16 |
| 12 | 50°C | 10 wt% DMAC in IPA | 14 | 340 | 10 |
| 13 | 50°C | 30 wt% DMAC in IPA | 13 | 290 | 14 |

| | | | | | |
|---|---|---|---|---|---|
| * m³/m²•hr•atm | | | | | |

### Examples 14-23

Hollow fiber membranes were prepared as in Example 1 using the fiber-spinning polymer solution formulations and temperatures, and internal coagulation solutions listed in Table 4 and using 100% IPA as the quench solution and with no crosslinking. The nitrogen permeance, tensile strength, and elongation at break of these fibers were as shown in Table 4.

**Table 4**

| Ex. | Polymer Solution Formulation* | | | | Polymer Solution Temp. | Internal Coagulation Solution | Nitrogen Permeance** | Tensile Strength (g/fil) | Elongation at Break (%) |
|---|---|---|---|---|---|---|---|---|---|
| | PBI (wt%) | PVP (wt%) | n-propanol (wt%) | Water (wt%) | | | | | |
| 14 | 16 | 3 | 22 | 0.25 | 30°C | 20 wt% MeOH in IPA | 45 | 330 | 9 |
| 15 | 16 | 5 | 20 | 0.4 | 30°C | 20 wt% DMAC in IPA | 55 | 305 | 12 |
| 16 | 16 | 5 | 20 | 0.4 | 30°C | 100% IPA | 87 | 320 | 8 |
| 17 | 16 | 5 | 20 | 0.4 | 30°C | 30 wt% DMAC in IPA | 68 | 400 | 6 |
| 18 | 17 | 4 | 21 | 0.4 | 30°C | 20 wt% DMAC in IPA | 58 | 315 | 11 |
| 19 | 17 | 5 | 20 | 0.4 | 30°C | 20 wt% DMAC in IPA | 52 | 325 | 11 |
| 20 | 17 | 5 | 20 | 0.4 | 40°C | 20 wt% DMAC in IPA | 50 | 340 | 10 |
| 21 | 18 | 3 | 22 | 0.4 | 30°C | 5 wt% MeOH in IPA | 26 | 340 | 7 |
| 22 | 18 | 4 | 21 | 0.4 | 30°C | 20 wt% DMAC in IPA | 38 | 455 | 12 |
| 23 | 18 | 5 | 20 | 0.4 | 30°C | 20 wt% DMAC in IPA | 36 | 400 | 12 |

| | | | | | | | | | |
|---|---|---|---|---|---|---|---|---|---|
| * Balance DMAC | | | | | | | | | |
| ** m³/m²•hr•atm | | | | | | | | | |

### Examples 24-27

Fibers from Example 1 were crosslinked as in Example 1 except that the concentration of DBB was varied as indicated in Table 5 and the DBB was dissolved in methyl ethyl ketone (MEK). The tensile strengths and fiber elongations at break after crosslinking and before and after soaking in NMP for 72 hours at 100°C are also reported in Table 5.

**Table 5**

| | | After Crosslinking | | After NMP Soak | |
|---|---|---|---|---|---|
| Example | DBB Conc. (wt%) | Tensile Strength (g/fil) | Elongation at Break (%) | Tensile Strength (g/fil) | Elongation (%) |
| 24 | 0.2 | 898 | 27 | 150 | 56 |
| 25 | 0.5 | 862 | 27 | 208 | 147 |
| 26 | 1.0 | 985 | 23 | 439 | 71 |
| 27 | 5.0 | 933 | 19 | 612 | 31 |

### Example 28

A bundle comprising 20 crosslinked hollow fibers of Example 1 was incorporated into a module with an epoxy potting compound. The module was equipped with a permeate port located near its feed end and a second port located near its retentate end. The effective length and area of the fibers were 38 cm and 96 cm², respectively. The fibers in this module were rinsed first with 200 ml of acetone and then with about 200 ml of a 0.5 wt% ammonia solution in water.

A selective coating was formed on the inner surface or lumens of the fibers in this module using the following procedure. First, an aqueous solution comprising 1 wt% N,N*'*,N*''*,N*'''*-tetramethyl tetra-kis-aminomethyl methane and 0.5 wt% triethyl amine was circulated through the fibers for 2 minutes. This solution was then drained from the fibers by gravity and dry nitrogen was forced down the fiber lumens for 2 minutes. Next, a 0.5 wt% solution of isophthaloyl chloride in hexane was circulated through the fiber lumens for 1 minute, resulting in the formation of an interfacially polymerized polyamide coating on the inner or lumen surface. The coating was dried by forcing dry nitrogen at ambient temperature down the fiber lumens for 10 minutes, then increasing the temperature of the dry nitrogen to 60°C for 16 hours. The resulting composite hollow fiber membrane module had a permeability to dry nitrogen of less than 0.2 m³/m²•hr•atm.

### Example 29

The module of Example 28 was evaluated in a reverse osmosis test by circulating a feed solution comprising 5000 ppm MgSO₄ in water at 25°C and pH 6 through the fiber lumens at a pressure of 28 atm. The module exhibited a water flux of about 110 L/m²·hr and a salt rejection of 99%.

### Example 30

A module was prepared as in Example 28, except that a second coating was formed on top of the interfacially polymerized polyamide coating as follows. Solution A was prepared by dissolving 10 g of polyethyleneimine in 90 g of water to make a 10 wt% solution. Solution B was prepared by dissolving 10 g of polyvinyl alcohol in 90 g of hot (80°C) water, then allowed to cool, forming a 10 wt% solution. Solution C was prepared by dissolving 10 g of succinic anhydride and 5 g of 1 M HCl in 85 g of hot (65°C) ethanol, then allowed to cool. A coating solution was then formed by mixing 47 g of Solution A, 23 g of Solution B, and 10 g of Solution C in 10 g water, 10 g ethanol, and two drops of surfactant.

The second coating was applied on top of the polyamide coating by filling the lumens of the hollow fibers with the second coating solution for 1 minute, then draining by gravity. Dry nitrogen at room temperature was first forced through the lumens of the fibers for 10 minutes. The module was then rotated end-for-end and the process repeated. Hot nitrogen at 80°C was then forced through the lumens of the fibers for 2 hours. The temperature of the nitrogen was then increased to 130°C and the procedure repeated for 3 hours. Finally, dry nitrogen at ambient temperature was forced through the lumens of the fibers overnight. The resulting composite hollow fiber membrane module had a permeability to dry nitrogen of less than 0.05 m³/m²•hr•atm.

### Example 31

A module was prepared as in Example 30 except that a bundle of about 2900 fibers was used and the effective membrane area of the module was 2.8 m². This module was then tested using a vaporous feed stream of 5.2 wt% water in IPA at 91°C at a flow rate of 0.82 kg/min and a pressure of 1.2 atm (absolute). A sweep stream of dry nitrogen at 57 L/min and 90°C was introduced at the permeate port located near the retentate end of the module. The combined sweep stream/permeate exiting the module at the permeate port located near the feed end of the module was directed to a vacuum pump, which maintained the pressure on the permeate side of the fibers at about 0.1 atm. The concentration of IPA in the vacuum exhaust was measured to be 0.5 mol%. The vaporous retentate stream exiting the module was condensed and had a water concentration of 0.03 wt%. Based on these data, the water permeability of the module was calculated to be about 9 m³/m²•hr•atm, while the IPA permeability was calculated to be about 0.0003 m³/m²•hr•atm. Thus, the module had a water/IPA selectivity of about 30,000.

The terms and expressions which have been employed in the foregoing specification are used therein as terms of description and not of limitation, and there is no intention, in the use of such terms and expressions, of excluding equivalents of the features shown and described or portions thereof, it being recognized that the scope of the invention is defined and limited only by the claims which follow.

## Claims

1. A method of making a polybenzimidazole microporous hollow fiber membrane comprising the steps:
(a) providing a polymer solution comprising 15 to 30 wt% polybenzimidazole, 2 to 5 wt% high molecular weight pore-former having a molecular weight of ≥1000 daltons, 5 to 30 wt% low molecular weight pore-former having a molecular weight of ≤100 daltons, and a solvent;
(b) forming a spun membrane by extruding said polymer solution of step (a) through an orifice at a temperature of 25° to 60°C while simultaneously injecting a coagulating fluid through a needle located in said orifice;
(c) providing a quench bath;
(d) passing the spun membrane of step (b) through said quench bath at a temperature of from 10° to 40°C to form a microporous hollow fiber membrane; and
(e) rinsing said membrane of step (d).

2. The method of claim 1 wherein said high molecular weight pore-former is selected from the group consisting of polyvinyl pyrrolidinone, polyvinyl alcohol, polyvinyl acetate, polyethylene glycol and polypropylene glycol; and said low molecular weight pore-former is selected from the group consisting of (i) a lower alkanol, (ii) a polyfuntional alcohol, (iii) ester and ether derivatives of an alkanol, (iv) ester and ether derivatives of a polyfunctional alcohol, (v) mixtures of (i) - (iv), and (vi) mixtures of water and at least one of (i) - (v).

3. The method of claim 1 wherein said high molecular weight pore-former is polyvinyl pyrrolidinone and said low molecular weight pore-former is n-propanol.

4. The method of claim 1, including the following additional steps:
(f) drying said membrane of step (d); and
(g) post-treating said membrane of step (f).

5. The method of claim 4 wherein step (g) is selected from annealing and crosslinking.

6. The method of claim 5 wherein step (g) is crosslinking and said crosslinking is conducted by contacting said membrane with a crosslinking solution comprising a multi-functional alkyl halide in a solvent followed by heating said membrane sufficiently to cause crosslinking to take place, wherein said multi-functional alkyl halide has a structure selected from
X - (CH₂)ₙ - CH₂-X
and 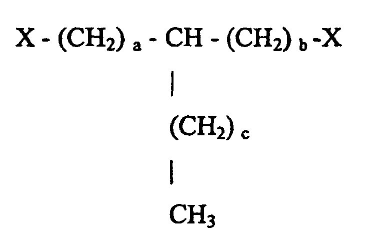 where
X is selected from Br and Cl,
n is an integer of from 1 to 11,
a is an integer of from 1 to 10,
b is a number of from 0 to 4, and
c is a number of from 0 to 6.

7. The method of claim 6 wherein said solvent is selected from a ketone and an ether.

8. The method of claim 7 wherein said multi-functional alkyl halide is dibromobutane, said solvent is selected from the group consisting of acetone, methyl isobutyl ketone, methyl ethyl ketone and pentanone, and said heating is conducted at a temperature of from 25° to 200°C for 0.5 to 48 hours.

9. The method of claim 6 wherein a surface of said hollow fiber membrane is coated with at least one permselective coating

10. The method of claim 9 wherein said at least one permselective coating is coated on the lumens of said hollow fiber membrane.

11. The method of claim 9 wherein said at least one permselective coating is a crosslinked polymer selected from the group consisting of poly (acrylic acids), poly (acrylates), polyacetylenes, poly (vinyl acetates), polyacrylonitriles, polyamines, polyamides, polyethers, polyurethanes, polyvinyl alcohols, polyesters, cellulose, cellulose esters, cellulose ethers, chitosan, chitin, polymers containing hydrophilic groups, elastomeric polymers, halogenated polymers, fluoroelastomers, polyvinyl halides, polyphosphazenes, poly (dimethyl siloxanes) and copolymers and blends thereof.

12. The method of claim 6 wherein said crosslinking is conducted by
(a) soaking said membrane in said crosslinking solution from 0.5 to 48 hours and at a temperature from 25° to 150°C; and
(b) heating said membrane from 0.5 to 48 hours at a temperature of 25° to 200°C.

## Patentansprüche

1. Verfahren zum Herstellen einer mikroporösen Polybenzimidazol-Hohlfasennembran, umfassend die Schritte:
(a) Vorsehen einer Polymerlösung, welche 15 bis 30 Gew.-% Polybenzimidazol, 2 bis 5 Gew.-% eines Porenbildners mit hohem Molekulargewicht mit einem Molekulargewicht ≥1000 Dalton, 5 bis 30 Gew.-% eines Porenbildners mit niedrigem Molekulargewicht mit einem Molekulargewicht ≤100 Dalton und ein Lösungsmittel aufweist;
(b) Bilden einer gesponnenen Membran durch Extrudieren der Polymerlösung von Schritt (a) durch eine Öffnung bei einer Temperatur von 25 bis 60°C unter gleichzeitigem Injizieren eines Koagulierungsfluids durch eine in der Öffnung angeordnete Nadel;
(c) Vorsehen eines Abschreckbades;
(d) H'mdurchfuhren der gesponnenen Membran von Schritt (b) durch das Abschreckbad bei einer Temperatur von 10 bis 40°C zum Bilden einer mikroporösen Hohlfasermembran; und
(e) Spülen der Membran von Schritt (d).

2. Verfahren nach Anspruch 1, **dadurch gekennzeichnet, dass** der Porenbildner mit hohem Molekulargewicht ausgewählt wird aus der Gruppe, welche besteht aus: Polyvinylpyrrolidinon, Polyvinylalkohol, Polyvinylacetat, Polyethylenglycol und Polypropylenglycol; und dass der Porenbildner mit niedrigem Molekulargewicht ausgewählt wird aus der Gruppe, welche besteht aus: (i) einem niederwertigen Alkanol, (ii) einem mehrfunktionellen Alkohol, (iii) Ester- und Etherderivaten eines Alkanols, (iv) Ester- und Etherderivaten eines mehrfunktionellen Alkohols, (v) Gemischen aus (i) - (iv) und (vi) Gemischen aus Wasser und wenigstens einem der (i) - (v).

3. Verfahren nach Anspruch 1, **dadurch gekennzeichnet, dass** der Porenbildner mit hohem Molekulargewicht Polyvinylpyrrolidinon und dass der Porenbildner mit niedrigem Molekulargewicht n-Propanol ist.

4. Verfahren nach Anspruch 1, **gekennzeichnet durch** die folgenden zusätzlichen Schritte:
(f) Trocknen der Membran gemäß Schritt (d); und
(g) Nachbehandeln der Membran gemäß Schritt (f).

5. Verfahren nach Anspruch 4, **dadurch gekennzeichnet, dass** Schritt (g) aus Spannungsfreimachen und Vernetzen gewählt wird.

6. Verfahren nach Anspruch 5, **dadurch gekennzeichnet, dass** Schritt (g) Vernetzen ist und dass das Vernetzen durch Kontaktieren der Membran mit einer Vemetzungslösung, welche ein mehrfunktionelles Alkylbalid in einem Lösungsmittel aufweist, gefolgt von einem hinreichenden Erwärmen der Membran zum Herbeiführen einer Vernetzung durchgeführt wird, wobei das mehrfunktionelle Alkylhalid eine Struktur hat, welche gewählt wird aus
X - (CH₂)ₙ - CH₂-X
und 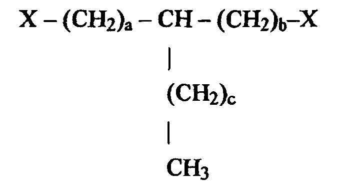 wobei
X aus Br und Cl gewählt wird,
n eine ganze Zahl von 1 bis 11 ist,
a eine ganze Zahl von 1 bis 10 ist,
b eine Zahl zwischen 0 und 4 ist und
c eine Zahl zwischen 0 und 6 ist.

7. Verfahren nach Anspruch 6, **dadurch gekennzeichnet, dass** das Lösungsmittel aus einem Keton und einem Ether ausgewählt wird.

8. Verfahren nach Anspruch 7, **dadurch gekennzeichnet, dass** das mehrfunktionelle Alkylhalid Dibrombutan ist, dass das Lösungsmittel ausgewählt wird aus der Gruppe bestehend aus Aceton, Methylisobutylketon, Methylethylketon und Pentanon und dass das Erwärmen für 0,5 bis 48 Stunden bei einer Temperatur von 25 bis 200°C durchgeführt wird.

9. Verfahren nach Anspruch 6, **dadurch gekennzeichnet, dass** eine Oberfläche der Hohlfasermembran mit wenigstens einem permselektiven Überzug beschichtet wird.

10. Verfahren nach Anspruch 9, **dadurch gekennzeichnet, dass** der wenigstens eine permselektive Überzug auf die Lumen der Hohlfasermembran aufgebracht wird.

11. Verfahren nach Anspruch 9, **dadurch gekennzeichnet, dass** der wenigstens eine permselektive Überzug ein vernetztes Polymer ausgewählt aus der Gruppe ist, welche besteht aus: Polyacrylsäure, Polyacrylaten, Polyacetylenen, Polyvinylacetaten, Polyacrylnitrilen, Polyaminen, Polyamiden, Polyethern, Polyurethanen, Polyvinylalkoholen, Polyestern, Cellulose, Celluloseestern, Celluloseethern, Chitosan, Chitin, Polymeren enthaltend hydrophile Gruppen, Elastomerpolymeren, Halogenpolymeren, Fluorelastomeren, Polyvinylhaliden, Polyphosphazenen, Polydimethylsiloxanen und deren Copolymeren und Mischungen.

12. Verfahren nach Anspruch 6, **dadurch gekennzeichnet, dass** das Vernetzen durchgeführt wird durch:
(a) Tränken der Membran in einer Vernetzungslösung für 0,5 bis 48 Stunden und bei einer Temperatur von 25 bis 150°C; und
(b) Erwärmen der Membran für 0,5 bis 48 Stunden bei einer Temperatur von 25 bis 200°C.

## Revendications

1. Procédé de fabrication d'une membrane en fibres creuses microporeuse en polybenzimidazole comprenant les étapes consistant à :
(a) fournir une solution polymère comprenant de 15 à 30 % en poids de polybenzimidazole, de 2 à 5 % en poids de porogène de poids moléculaire élevé ayant un poids moléculaire ≥ 1 000 daltons, de 5 à 30 % en poids de porogène de faible poids moléculaire ayant un poids moléculaire ≤ 100 daltons, et un solvant ;
(b) former une membrane filée en extrudant ladite solution polymère de l'étape (a) à travers un orifice à une température comprise entre 25° et 60°C tout en ajoutant simultanément un fluide coagulant à travers une aiguille située dans ledit orifice ;
(c) fournir un bain de trempe ;
(d) passer la membrane filée de l'étape (b) par ledit bain de trempe à une température comprise entre 10° et 40°C pour former une membrane en fibres creuses microporeuse ; et
(e) rincer ladite membrane de l'étape (d).

2. Procédé selon la revendication 1, dans lequel ledit porogène de poids moléculaire élevé est choisi parmi le groupe constitué de polyvinyl pyrrolidinone, alcool polyvinylique, acétate polyvinylique, polyéthylène glycol et polypropylène glycol ; et ledit porogène de faible poids moléculaire est choisi parmi le groupe constitué de (i) un alcanol de faible poids moléculaire, (ii) un alcool polyfonctionnel, (iii) les dérivés d'ester et d'éther d'un alcanol, (iv) les dérivés d'ester et d'éther d'un alcool polyfonctionnel, (v) les mélanges de (i) à (iv), et (vi) les mélanges d'eau et d'au moins un parmi (i) à (v).

3. Procédé selon la revendication 1, dans lequel ledit porogène de poids moléculaire élevé est le polyvinyl pyrrolidinone et ledit porogène de faible poids moléculaire est le n-propanol.

4. Procédé selon la revendication 1, comprenant les étapes supplémentaires suivantes consistant à :
(f) sécher ladite membrane de l'étape (d) ; et
(g) post-traiter ladite membrane de l'étape (f).

5. Procédé selon la revendication 4, dans lequel l'étape (g) est choisie parmi le recuit et la réticulation.

6. Procédé selon la revendication 5, dans lequel l'étape (g) est la réticulation et ladite réticulation est réalisée en mettant en contact ladite membrane avec une solution de réticulation comprenant un halogénure d'alkyle multifonctionnel dans un solvant suivie par le chauffage de ladite membrane de façon suffisante pour induire la réalisation de la réticulation, dans laquelle l'halogénure d'alkyle multifonctionnel a une structure choisie parmi
X-(CH₂)ₙ - CH₂-X
et 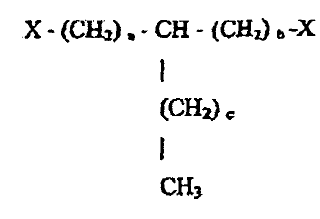 où
X est choisi parmi Br et Cl,
n représente un nombre entier de 1 à 11,
a représente un nombre entier de 1 à 10,
b représente un nombre de 0 à 4, et
c représente un nombre de 0 à 6.

7. Procédé selon la revendication 6, dans lequel ledit solvant est choisi parmi une cétone et un éther.

8. Procédé selon la revendication 7, dans lequel l'halogénure d'alkyle multifonctionnel est le dibromobutane, ledit solvant est choisi parmi le groupe constitué d'acétone, de méthylisobuthylcétone, de méthyléthylcétone et de pentanone, et ledit chauffage est réalisé à une température comprise entre 25° et 200°C pendant 0,5 à 48 heures.

9. Procédé selon la revendication 6, dans lequel une surface de ladite membrane en fibres creuses est revêtue avec au moins un revêtement permsélectif.

10. Procédé selon la revendication 9, dans lequel ledit au moins un revêtement permsélectif est enduit sur les lumens de ladite membrane en fibres creuses.

11. Procédé selon la revendication 9, dans lequel ledit au moins un revêtement permsélectif est un polymère réticulé choisi parmi le groupe constitué d'acides poly(acryliques), de poly(acrylates), de polyacétylènes, de poly(acétate de vinyle), de polyacrylonitriles, de polyamines, de polyamides, de polyéthers, de polyuréthanes, d'alcools polyvinyliques, de polyesters, de cellulose, d'esters de cellulose, d'éthers de cellulose, de chitosane, de chitine, de polymères contenant des groupes hydrophiles, de polymères élastomères, de polymères halogénés, de fluoroélastomères, d'halogénures polyvinyliques, de polyphosphazènes, de poly(diméthyl siloxanes) et de copolymères et de mélanges de ceux-ci.

12. Procédé selon la revendication 6, dans laquelle ladite réticulation est réalisée en
(a) trempant ladite membrane dans ladite solution de réticulation pendant 0,5 à 48 heures et à une température comprise entre 25° et 150°C ; et
(b) chauffant ladite membrane pendant 0,5 à 48 heures à une température comprise entre 25° et 200°C .
